# EUROPÄISCHE PATENTANMELDUNG

(11) **EP 1 253 343 A2**
(43) Veröffentlichungstag der Anmeldung: **30.10.2002**
(21) Anmeldenummer: 02006350.9
(22) Anmeldetag: 21.03.2002
(51) Int. Cl.: F16F 1/16

(54) **Drehstabfeder**

(30) Priorität: 25.04.2001 DE 10120399
(71) Anmelder: DaimlerChrysler AG, 70567 Stuttgart (DE)
(72) Erfinder: Meintschel, Jens, 73730 Esslingen (DE); Reinhardt, Rudolf, 73732 Esslingen (DE); Schietinger, Bernd, 73733 Esslingen (DE); Stolk, Thomas, 73230 Kirchheim (DE)

(57) **Zusammenfassung**

Die Erfindung betrifft eine Drehstabfeder (20) aus Federstahl mit einem hohen Kohlenstoffgehalt, die an ihren Enden (22,23) mit jeweils einem Bauteil (12,21) drehfest verbunden ist, wobei die Bauteile relativ zueinander schwenkbar gelagert sind. Es wird vorgeschlagen, dass sie durch Reibschweißen, Kondensatorentladungsschweißen, Diffusionsschweißen oder Mittelfrequenzpressschweißen über Zwischenstücke mit mindestens einem der Bauteile stoffschlüssig verbunden ist. Dadurch kann in einem beengten Bauraum eine spielfreie und verschleißfreie Verbindung zwischen der Drehstabfeder und dem Bauteil hergestellt werden, die geeignet ist, hohe Belastungen, insbesondere Wechselbelastungen, aufzunehmen.

## Beschreibung

Die Erfindung betrifft eine Drehstabfeder nach dem Oberbegriff des Anspruchs 1.

Aus der DE 3616 540 A1 ist ein elektromagnetischer Aktuator zum Betätigen eines Gaswechselventils einer Hubkolbenbrennkraftmaschine bekannt. Ein Anker ist zwischen zwei Elektromagneten angeordnet, die wechselweise periodisch erregt werden und dabei den Anker anziehen. Der Anker ist über einen Ankerstößel an einem einarmigen Ventilhebel angelenkt, der entgegen der Federspannung einer Drehstabfeder hin und her geschwenkt wird und dabei das Gaswechselventil öffnet und schließt. Der Ventilhebel ist an einem Ende als Lagerrohr ausgebildet, das an seinen beiden Seiten in Lagerböcken gelagert ist. Die Drehstabfeder ragt mit ihrem einen Ende in das Lagerrohr und ist im Bereich des einen Lagerbocks drehfest mit dem Lagerrohr verbunden. Mit ihrem anderen Ende ist die Drehstabfeder in einer Haltebuchse drehfest eingespannt, die ihrerseits einstellbar an einem Zylinderkopf der Brennkraftmaschine angeflanscht ist. Als Verbindung zwischen der Drehstabfeder einerseits und dem Lagerrohr bzw. der Haltebuchse andererseits dient eine Kerbverzahnung. Um die anfallenden hohen Wechselbelastungen über eine lange Betriebsdauer sicher übertragen zu können, muss die Kerbverzahnung entsprechend groß dimensioniert werden, wofür in der Regel kein ausreichender Bauraum zur Verfügung steht. Außerdem ist nicht gewährleistet, dass die Kerbverzahnung gleichmäßig trägt und sich unter der Dauerwechselbelastung kein Spiel ergibt, das sich im Laufe der Zeit durch Verschleiß der Kerbverzahnung vergrößem würde.

Die Aufgabe der Erfindung besteht darin, in einem beengten Bauraum eine spielfreie und verschleißfreie Verbindung zwischen einer Drehstabfeder und einem Bauteil zu schaffen, die in der Lage ist, hohe Wechselbelastungen aufzunehmen. Die Aufgabe wird erfindungsgemäß durch die Merkmale des Anspruchs 1 gelöst. Vorteilhafte Ausgestaltungen und Weiterbildungen der Erfindung ergeben sich aus den Unteransprüchen.

Nach der Erfindung ist die Drehstabfeder durch Reibschweißen, durch Kondensatorentladungsschweißen, Diffusionsschweißen oder Mittelfrequenzpressschweißen mit mindestens einem oder beiden Bauteilen über ein bzw. zwei Zwischenstücke stoffschlüssig verbunden. Die stoffschlüssige Verbindung hat gegenüber kraftschlüssigen Verbindungen, wie Presssitze, Kegelsitze oder gegenüber formschlüssigen Verbindungen wie Kerbverzahnungen, Sechskant usw. den Vorteil, dass sie spielfrei und verschleißfrei ist, keine so hohe Fertigungsgenauigkeit erfordert und zum Übertragen hoher Belastungen, insbesondere Wechselbelastungen, besonders geeignet ist. Da die Verbindung selbst spannungsarm ausgeführt werden kann, im Gegensatz zu den kraftschlüssigen Verbindungen, und im Gegensatz zu formschlüssigen Verbindungen mit einer einfachen rotationssymmetrischen Geometrie auskommt, die den Verbindungsquerschnitt nicht durch Kerbeinflüsse schwächt, kann die Verbindungsstelle sowohl im Durchmesser als auch in der axialen Erstreckung klein gehalten werden.

Die Drehstabfeder besteht in der Regel aus einem Federstahl mit einem hohen Kohlenstoffgehalt, der sich mit einem üblichen Schmelzschweißverfahren wie Laserschweißen nicht betriebssicher mit anderen Bauteilen verschweißen lässt. Es wird daher erfindungsgemäß für die stoffschlüssige Verbindung vorgeschlagen, die Drehstabfeder über Zwischenstücke mit den anderen Bauteilen zu verbinden, indem die Drehstabfeder zuerst durch Reibschweißen, Kondensatorentladungsschweißen, Diffusionsschweißen oder Mittelfrequenzpresschweißen mit dem Verbindungsstück verschweißt wird und danach das Verbindungsstück durch ein übliches Schmelzschweißen, z.B. einem Laserstrahlschweißverfahren, mit dem Bauteil verbunden wird. So ist es möglich, eine betriebssichere, stoffschlüssige Verbindung zwischen der Drehstabfeder und dem Verbindungsstück herzustellen und darauf eine gleiche Verbindung zwischen dem Verbindungsstück und dem Bauteil durch ein übliches Schmelzschweißverfahren zu erzeugen, das keine besonderen Verfahrensvoraussetzungen verlangt.

Als Werkstoff für das Verbindungsstück eignet sich ein Stahl mit einem geringeren Kohlenstoffgehalt, der mit üblichen Schweißverfahren verschweißt werden kann, z.B. ein handelsüblicher 16MnCr5-Stahl (Mn=Mangan; Cr=Chrom). Je nach baulichen Gegebenheiten kann das Verbindungsstück in vorteilhafter Weise mit einer Stirnseite oder dem Umfang am Ende der Drehstabfeder verschweißt werden. Anstelle eines Verbindungsstücks kann auch eine Verbindungsschicht mit den gleichen Eigenschaften wie das Verbindungsstück auf die Drehstabfeder aufgetragen werden. Zweckmäßigerweise wird die Drehstabfeder vergütet und endbearbeitet, nachdem das Verbindungsstück verschweißt bzw. die Verbindungsschicht aufgetragen ist.

Die erfindungsgemäße Drehstabfeder wird in vorteilhafter Weise bei einem Aktuator mit einem Anker angewendet, der in einem Schwenklager schwenkbar zwischen zwei Elektromagneten gelagert ist. Hier sind die Bauraumverhältnisse besonders beengt. Durch die erfindungsgemäßen Maßnahmen ist es möglich, eine Drehstabfeder mit einer ausreichenden Federkraft und Federlänge unterzubringen und den vorhandenen Bauraum sowohl in der Länge als auch im Durchmesser optimal zu nutzen. Hierzu ist die Drehstabfeder in einer Bohrung, einer Nabe oder Lagerhülse angeordnet, die Bestandteil eines Schwenklagers eines Ankers eines Aktuators ist, der ein Gaswechselventil einer Brennkraftmaschine betätigt. Die Nabe bzw. die Lagerhülse ist an einem Ende an ihrem äußeren Umfang mittels eines Lagers in einem Gehäuse, z.B. dem Gehäuse des Aktuators oder im Zylinderkopf selbst schwenkbar gelagert. Die Drehstabfeder ist in der Bohrung der Lagerhülse untergebracht und im Bereich des Lagers mit ihrem einen Ende mit der Lagerhülse erfindungsgemäß verbunden. Das andere Ende der Drehstabfeder, das aus der Lagerhülse herausragt, kann in gleicher Weise mit dem Gehäuse des Aktuators oder dem Zylinderkopf verbunden werden. Nahe dieser Verbindungsstelle ist die Nabe bzw. die Lagerhülse zweckmäßigerweise mittels eines Lagers auf der Drehstabfeder schwenkbar gelagert.

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:

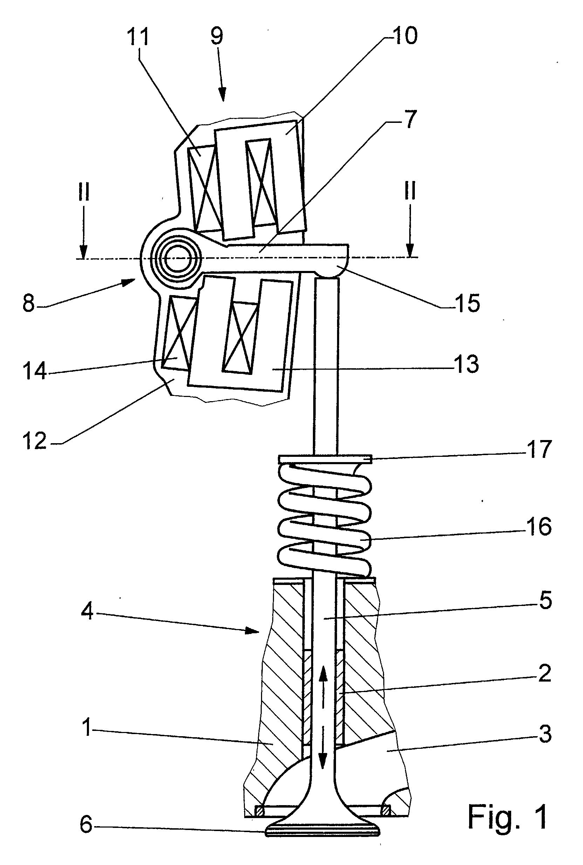

- Fig. 1: einen schematischen Teilschnitt durch einen Zylinderkopf einer Hubkolbenbrennkraftmaschine mit einem Aktuator,

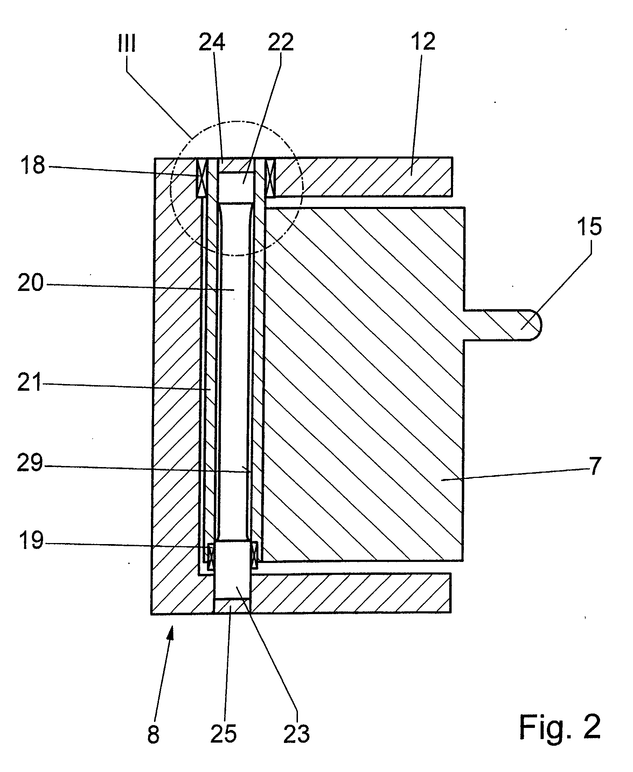

- Fig. 2: einen Schnitt entsprechend der Linie II-II in Fig. 1,
- Fig. 3: einen vergrößerten Ausschnitt entsprechend der Linie III-III in Fig. 2 und
- Fig. 4: eine Variante zu Fig. 3.
In einem Zylinderkopf 1 einer nicht näher dargestellten Hubkolbenbrennkraftmaschine ist ein Gaswechselkanal 3 vorgesehen, der von einem Gaswechselventil 4 mit einem Ventilteller 6 gesteuert wird. Das Gaswechselventil 4, dessen Ventilschaft 5 mittels einer Ventilführung 2 im Zylinderkopf 1 geführt ist, wird von einer Ventilfeder 16 in Schließrichtung belastet. Diese stützt sich mit einem Ende über einen Federteller 17 am Ventilschaft 5 und mit ihrem anderen Ende am Zylinderkopf 1 ab.

Das Gaswechselventil 4 wird von einem Aktuator 9 betätigt. Dieser besitzt zwei Elektromagnete, von denen der obere von einem Joch 10 und einer Magnetspule 11 und der untere von einem Joch 13 und einer Magnetspule 14 gebildet wird. Die Elektromagnete 10, 11 und 13, 14 sind in einem Gehäuse 12 untergebracht, in dem ein Anker 7 in einem Schwenklager 8 schwenkbar zwischen den Elektromagneten 10, 11 bzw. 13, 14 gelagert ist. Der Anker 7 besitzt an seinem freien Ende einen Finger 15, mit dem er den Ventilschaft 5 des Gaswechselventils 4 betätigt.

Im Bereich des Schwenklagers 8 ist mit dem Anker 7 eine Nabe in Form einer Lagerhülse 21 verbunden, die an einem Ende an ihrem äußeren Umfang mittels eines Lagers 18 im Gehäuse 12 des Aktuators 9 schwenkbar gelagert ist und eine zentrale Bohrung 29 aufweist, in der eine Drehstabfeder 20 untergebracht ist. Diese ist im Bereich des Lagers 18 mit einem Ende 22 mit der Lagerhülse 21 über ein Verbindungsstück 24 stoffschlüssig verbunden, indem sie an ihrer Stirnseite zunächst durch Reibschweißen, Kondensatorentladungsschweißen, Diffusionsschweißen oder Mittelfrequenzpresschweißen mit dem Verbindungsstück 24 verschweißt wird, wodurch eine Schweißnaht 26 entsteht. Danach wird das Verbindungsstück 24 durch ein übliches Schmelzschweißverfahren mit der Lagerhülse 21 verschweißt, wobei eine Schweißnaht 27 gebildet wird. Das Verbindungsstück 24 ist aus einem Werkstoff hergestellt, der sowohl mit den genannten Verfahren mit der Drehstabfeder 20 verbunden als auch mit üblichen Schweißverfahren mit der Lagerhülse 21 verschweißt werden kann. Die Drehstabfeder 20 ragt mit ihrem anderen Ende 23 aus der Lagerhülse 21 heraus und greift in eine Bohrung 29 des Gehäuses 12 ein, mit dem sie in gleicher Weise über ein Verbindungsstück 25 stoffschlüssig verbunden werden kann. Die Lagerhülse 21 ist an diesem Ende mittels eines Lagers 19, das in die zentrale Bohrung 29 eingesetzt ist, auf der Drehstabfeder 20 oder einem die Drehstabfeder 20 umgebenden Gehäusestutzen schwenkbar gelagert.

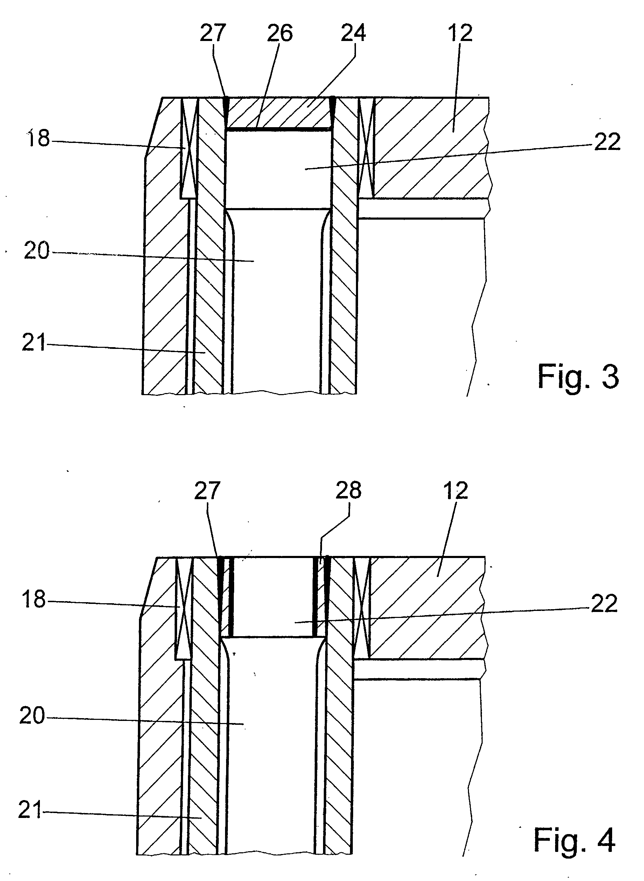

Fig. 4 zeigt eine Variante, bei der auf die Drehstabfeder 20 eine Verbindungsschicht 28 am Umfang des Endes 22 aufgetragen ist, die die gleichen Eigenschaften wie die Verbindungsstücke 24 bzw. 25 besitzt und sich somit z.B. durch Laserstrahlschweißen mit der Lagerhülse 21 verbinden lässt. Anstelle der Verbindungsschicht 28 kann auch ein entsprechendes hülsenförmiges Verbindungsstück treten, das wie das Verbindungsstück 24, 25 mit der Drehstabfeder 20 verschweißt wird.

## Patentansprüche

1. Drehstabfeder aus Federstahl mit einem hohen Kohlenstoffgehalt, die an ihren Enden mit jeweils einem Bauteil drehfest verbunden ist, wobei die Bauteile relativ zueinander schwenkbar gelagert sind, **dadurch gekennzeichnet, dass** die Drehstabfeder (20) durch Reibschweißen, Kondensatorentladungsschweißen, Diffusionsschweißen oder Mittelfrequenzpressschweißen über ein Verbindungsstück (24, 25) aus einem Werkstoff, der sich schmelzschweißen lässt, mit dem Bauteil (12, 21) verbunden ist, indem sie zuerst durch Reibschweißen, Kondensatorentladungsschweißen, Diffusionsschweißen oder Mittelfrequenzpressschweißen mit dem Verbindungsstück (24, 25) verschweißt wird und danach das Verbindungsstück (24, 25) durch Schmelzschweißen mit dem Bauteil (12, 21) verbunden wird.

2. Drehstabfeder nach Anspruch 2, **dadurch gekennzeichnet, dass** als Schmelzschweißverfahren ein Laserstrahlschweißverfahren verwendet wird.

3. Drehstabfeder nach einem der Ansprüche 2 bis 3, **dadurch gekennzeichnet, dass** das Verbindungsstück (24, 25) einen Kohlenstoffgehalt aufweist, der mit üblichen Schweißverfahren verschweißt werden kann.

4. Drehstabfeder nach Anspruch 4, **dadurch gekennzeichnet, dass** das Verbindungsstück (24, 25) aus einem 16MnCr5-Stahl hergestellt ist.

5. Drehstabfeder nach einem der Ansprüche 1 bis 5, **dadurch gekennzeichnet, dass** das Verbindungsstück (24, 25) mit einer Stimseite der Drehstabfeder (20) verschweißt ist.

6. Drehstabfeder nach einem der Ansprüche 1 bis 5, **dadurch gekennzeichnet, dass** das Verbindungsstück (24, 25) am Umfang der Drehstabfeder (20) verschweißt ist.

7. Drehstabfeder nach einem der Ansprüche 2 bis 7, **dadurch gekennzeichnet, dass** anstelle eines Verbindungsstücks (24, 25) eine Verbindungsschicht (28) auf der Drehstabfeder (20) aufgetragen ist.

8. Drehstabfeder nach einem der Ansprüche 2 bis 8, **dadurch gekennzeichnet, dass** sie (20) nach dem Verschweißen mit dem Verbindungsstück (24, 25) bzw. dem Auftragen der Verbindungsschicht (28) vergütet und endbearbeitet wird.

9. Drehstabfeder nach einem der Ansprüche 2 bis 9, **dadurch gekennzeichnet, dass** sie (20) in einer Bohrung (29) einer Nabe oder Lagerhülse (21) angeordnet ist, die Bestandteil eines Schwenklagers (8) eines Ankers (7) eines Aktuators (9) ist, der ein Gaswechselventil (4) einer Brennkraftmaschine betätigt.

10. Drehstabfeder nach Anspruch 10, **dadurch gekennzeichnet, dass** die Nabe bzw. Lagerhülse (21) an einem Ende an ihrem äußeren Umfang mittels eines Lagers (18) in einem Gehäuse (12) schwenkbar gelagert und im Bereich des Lagers (18) in ihrer Bohrung (29) mit dem einen Ende (22) der Drehstabfeder (20) verbunden ist.

11. Drehstabfeder nach Anspruch 11, **dadurch gekennzeichnet, dass** sie (20) mit ihrem anderen Ende (23) mit dem Gehäuse (12) verbunden ist und die Nabe bzw. die Lagerhülse (21) nahe dem Ende (23) auf der Drehstabfeder (20) mittels eines Lagers (19) in ihrer Bohrung (29) schwenkbar gelagert ist.
